# EUROPÄISCHE PATENTSCHRIFT

(11) **EP 2 004 444 B1**
(45) Veröffentlichungstag und Bekanntmachung des Hinweises auf die Patenterteilung: **28.03.2012**
(21) Anmeldenummer: 07728060.0
(22) Anmeldetag: 12.04.2007
(51) Int. Cl.: B60K 17/04

(54) **EINZELRADGETRIEBE**
INDIVIDUAL WHEEL GEAR SET
TRANSMISSION POUR UNE ROUE INDIVIDUELLE

(30) Priorität: 13.04.2006 DE 102006017454
(43) Veröffentlichungstag der Anmeldung: 24.12.2008
(73) Patentinhaber: Seikel, Peter, 63579 Freigericht (DE)
(72) Erfinder: Seikel, Peter, 63579 Freigericht (DE)
(74) Vertreter: Stoffregen, Hans-Herbert
(86) Internationale Anmeldenummer: PCT/EP2007/053593
(87) Internationale Veröffentlichungsnummer: WO 2007/118845

(56) Entgegenhaltungen:
- EP-A- 1 418 068
- EP-A1- 0 620 132
- WO-A-01/03963
- WO-A-2005/002898
- FR-A1- 2 726 230
- GB-A- 2 054 492
- US-A- 6 131 919

## Beschreibung

Die Erfindung bezieht sich auf ein Einzelradgetriebe für geländegängige Fahrzeuge mit hoher Bodenfreiheit, umfassend ein über eine Antriebswelle mit einer fahrzeugseitigen Gelenkwelle koppelbares Antriebsrad, welches über zumindest ein Zwischenrad mit einem Abtriebsrad gekoppelt ist, welches formschlüssig mit einer gegenüber der Antriebswelle zur Erzeugung einer hohen Bodenfreiheit höhenversetzten Abtriebswelle zum Antrieb einer Felge eines Rades verbunden ist.

Ein Einzelradgetriebe der eingangs beschriebenen Art ist aus der DE 36 40 947 C2 bekannt. Dabei handelt es sich um ein Getriebe mit Lastausgleich für ein lenkbares Rad eines Kraftfahrzeuges. Dieses Getriebe weist mindestens zwei Zwischenräder auf, welche zwei unterschiedliche Außendurchmesser aufweisende und drehfest miteinander verbundene Stufen haben. Die Stufe mit dem großen Außendurchmesser kämmt mit dem Eingangsrad und die Stufe mit dem kleinen Außendurchmesser kämmt mit einem Hohlrad, wobei das Hohlrad, das Eingangsrad und die Zwischenräder innerhalb der axialen Erstreckung des Rades angeordnet sind und wobei das Eingangsrad sowie die mit dem Hohlrad kämmenden Stufen fliegend gelagert sind. Zur Realisierung des Getriebes sind insgesamt sechs Zahnräder notwendig, wobei ein Zahnrad als Hohlrad ausgebildet und somit in seiner Herstellung aufwendig ist.

Bei der bekannten Ausführungsform erfolgt eine doppelte Untersetzung und zwar zunächst von dem Eingangsrad auf die erste und mit größerem Außendurchmesser versehene Stufe des Zwischenrades und dann von der zweiten mit kleinem Außendurchmesser versehenen Stufe des Zwischenrades auf das Hohlrad. Es handelt sich daher um einen "Langsamläufer", der nur bei speziell angepassten Antriebsübersetzungen bzw. Differentialen einsetzbar ist.

In der DE 21 16 441 B2 ist ein Achsgetriebe für Kraftfahrzeuge mit Portalachse beschrieben. Bei diesem Achsgetriebe wird die Antriebsleistung vom Fahrzeugantrieb über ein Wechselgetriebe und ein Ausgleichsgetriebe auf rechts- und linksseitige Achswellen und von diesen über je ein innerhalb des Achstrichters angeordnetes Untersetzungsgetriebe, welches aus einem Standgetriebe mit außen verzahnten Stirnrädern besteht, auf das auf der Randantriebswelle angeordnete Endrad geleitet. Dabei ist das Untersetzungsgetriebe innerhalb des nach unten ragenden Gehäuseteils der Portalachse angeordnet.

In der DE 197 17 866 A1 ist ein Fahrwerk für ein geländegängiges Fahrzeug beschrieben. Anstelle der für Geländefahrzeuge und Arbeitsmaschinen mit mehr als vier Rädern üblichen mechanischen Zusammenfassung von Radpaaren wird eine Aufhängung der Räder an einer hydraulisch abgestützten Schwinge vorgeschlagen. Über die Hydraulik lassen sich Bodenfreiheit, Einschwingverhalten, Ausbalancieren bei Schrägfahrten usw. ausgleichen.

Die DE 1 895 981 U1 offenbart eine Achse in einem schwimm- bzw. geländefähigen Fahrzeug. Das Fahrzeug umfasst Räder, innerhalb deren Radfelgen ein Vorgelege angeordnet ist. Die Antriebswellen derselben liegen oberhalb der Radachse. Das Achsmittelstück mit einem Differential, an dessen Antriebswelle sich beiderseits die Scheibenbremsen anschließen, ist unmittelbar mit dem Fahrzeugrahmen verbunden. Die Räder sind in beiden Fällen über Querlenker mit dem Fahrzeugkasten bzw. mit dem Fahrzeugrahmen verbunden, wobei bei dem schwimmfähigen Fahrzeug der untere Lenker durch eine Feder abgestützt wird, während bei dem geländegängigen Fahrzeug der obere Lenker durch eine regelbare Luftfeder gehalten ist.

In der DE 10 2004 003 644 A1 ist eine Portalachse für niederflurige Fahrzeuge beschrieben. Dabei besteht ein Portalgetriebe aus einem Antriebskegelrad, welches in Wirkverbindung mit einem ersten Vorgelegekegelrad steht, welches drehfest mit einem zweiten Vorgelegekegelrad verbunden ist, welches in Wirkverbindung mit einem Antriebskegelrad steht. Der vertikale Abstand der Drehachse des Antriebskegelrades zum Untergrund ist geringer als der vertikale Abstand der Vorgelegekegelräder zum Untergrund.

Die AT 184 451 offenbart eine landwirtschaftliche Zug- und Arbeitsmaschine mit veränderbarem Triebwerk. Das Triebwerk zeichnet sich dadurch aus, dass zur Lagerung der angetriebenen Fahrwerksteile (Raupenfahrwerke oder Räder) im Differentialgehäuse leicht auswechselbar befestigte Portalachsen verschiedener Länge dienen und dass die gelenkten Laufräder an verschiedenen Stellen ihrer Tragachse befestigbar sind. Diese Ausführungsform ist allerdings nicht gefedert.

In der DE 38 43 689 A1 ist eine Radaufhängung für Fahrzeuge mit veränderbarer Bodenfreiheit beschrieben. Dabei wird die Radaufhängung zusammen mit der Federung in Bezug auf das Fahrzeug verstellt. Dadurch ergeben sich bei Einzelradaufhängungen ungünstige kinematische Verhältnisse und bei angetriebenen Rädern Probleme mit den Beugewinkeln an den Antriebswellen. Ein Verstellmechanismus ist so mit dem Radträger verbunden, dass bei der durch. eine Betätigungsvorrichtung ausgeführten Verstellbewegung der Radträger in seiner Lage verbleibt und die Radachse ihre Lage in vertikaler Richtung ändert.

Die DD 86 561 B offenbart einen landwirtschaftlichen Traktor als Transporttraktor. Anstelle eines Hinterachs-Planetengetriebes ist ein mit verminderter Antriebsdrehzahl schwenkbar angeordnetes Hinterachs-Portalgetriebe so ausgebildet, dass der Radmittelpunkt nahe oder im Aufsattelpunkt liegt und ein Hinterradachs-Portalgetriebe mit einer Konsole und eine Hinterachsbrücke mit einem Ausleger zur Aufnahme von federnden und höheneinstellbaren Einrichtungen ausgebildet ist. Das Portalgetriebe selbst ist nicht federnd gelagert.

Aus der AT 215 830 ist eine Achse, insbesondere Treibachse für landwirtschaftliche Motorfahrzeuge bekannt. Auch bei dieser Ausführungsform handelt es sich im Wesentlichen um eine starre Achse, deren Treibradträger zum Verändern der Bodenfreiheit des Fahrzeuges um eine mit der Achse der Radantriebswelle oder der des Achsrohres zusammenfallende Achse verschwenkbar sind. Es ist vorgesehen, dass jedes mit einem Radträger verbundene Achsrohr unter Vermittlung einer Verstelleinrichtung gegenüber dem Fahrzeugrumpf verdrehbar und in verschiedenen Stellungen feststellbar ist, wobei der Radträger gegenüber dem Fahrzeugrumpf drehelastisch oder in einer Endstellung des Verschwenkbereich durch Federn abgestützt ist.

Die DE 10 2004 003 731 A1 offenbart eine Anordnung der Betätigungseinrichtung der Bremseinrichtung für eine Portalachse. Bei dieser Einrichtung ist der Bremssattel der Bremseinrichtung derart um die Radachse drehbar, dass die als axialer Zylinder ausgebildete Betätigungseinrichtung, deren Achse parallel zur Radachse ausgerichtet ist, in ein im Portalgehäuse vorgesehenes Loch oder in eine im Portalgehäuse vorgesehene U-förmige Ausnehmung mit einer offenen Seite anordbar ist. Dokument FR-A-2726230 offenbart ebenfalls Einzelradgetriebe

Sämtliche eingangs genannte Einzelradgetriebe sind für einen speziellen Anwendungsfall konzipiert und nur für das jeweilige Fahrzeug einsetzbar.

Ferner sind aus dem Stand der Technik herkömmliche, allradbetriebene Fahrzeuge bekannt, deren Räder unmittelbar mit einer Gelenkwelle des Fahrzeuges verbunden sind. Oft ist es jedoch wünschenswert, derartige allradbetriebene Fahrzeuge durch weitere Erhöhung der Bodenfreiheit geländetauglich zu machen.

Getriebe der eingangs genannten Art sind für dieses Vorhaben untauglich, da diese jeweils für einen speziellen Anwendungsfall konstruiert sind. Bisher war es üblich für jeden Fahrzeugtyp aufwendige Neukonstruktionen zu entwickeln, was entsprechend zeit- und damit kostenaufwendig ist.

Davon ausgehend liegt der vorliegenden Erfindung die Aufgabe zu Grunde, ein Einzelradgetriebe der eingangs genannten Art derart weiterzubilden, dass ein Umbau eines herkömmlichen Fahrzeugs zu einem geländegängigen Fahrzeug mit erhöhter Bodenfreiheit vereinfacht wird.

Die Aufgabe wird erfindungsgemäß u. a. dadurch gelöst, dass das Antriebsrad über ein einziges Zwischenrad mit dem Abtriebsrad in Eingriff ist, wobei das Antriebsrad, das Zwischenrad und das Abtriebsrad derart in einer Ebene liegend versetzt zueinander angeordnet sind, dass deren Mittelpunkte ein Dreieck bilden, dass das Antriebsrad, das Zwischenrad und das Abtriebsrad als Portalgetriebe in einem als nachrüstbarer Bausatz ausgebildeten Portalgehäuse angeordnet sind, umfassend ein erstes Portalgehäuseteil mit einem ersten Anlenkpunkt für eine Feder-Dämpfereinheit und einem zweiten Anlenkpunkt für zumindest einen Querlenker sowie ein als Deckel ausgebildetes zweites Portalgehäuseteil mit radseitigen Anlenkpunkten, an denen eine Bremseinrichtung sowie eine Radlagereinheit befestigt sind und dass die Felge des Rades das Portalgehäuse zumindest bereichsweise aufnimmt.

Durch die erfindungsgemäße Ausbildung des Einzelradgetriebes wird eine nachrüstbare mechanische Einzelraduntersetzung unter Beibehaltung der ursprünglichen Raddrehrichtung zur Verfügung gestellt.

Dabei ist vorgesehen, dass eine fahrzeugseitige Gelenkwelle über die Antriebswelle formschlüssig mit dem Antriebsrad gekoppelt ist, welches über ein einziges Zwischenrad mit dem Abtriebsrad in Eingriff ist, welches formschlüssig mit der Abtriebswelle gekoppelt ist. Vorzugsweise liegen dabei das Antriebsrad, das Zwischenrad und das Abtriebsrad in einer Ebene. Dadurch wird gegenüber dem Stand der Technik ein besonders kompakter Aufbau erreicht, der beim Nachrüsten des Einzelradgetriebes die Spurbreite des Fahrzeugs nur unwesentlich verbreitert.

Das Getriebe kann mit frei wählbarer Unter- oder Übersetzung ausgebildet sein, wobei Unter- bzw. Übersetzungen im Bereich von 0,5 bis 2,5 möglich sind.

Zur individuellen Anpassung an eine vorhandene Einzelradaufhängung eines straßengängigen Fahrzeugs ist das Getriebegehäuse zweiteilig ausgebildet, umfassend ein Portalgehäuseteil mit einem ersten Anlenkpunkt für eine Feder-Dämpfer-Einheit und einem ein nachträglicher Einbau ohne konstruktive Änderungen bei fast allen Fahrzeugen möglich.

Um eine weitere Bodenfreiheit zu erreichen, kann das zumindest eine Querlenkerelement eine Kröpfung aufweisen.

Ferner kann das Einzelradgetriebe als höhenverstellbares Portalgetriebe ausgebildet sein. Vorzugsweise weist das Portalgetriebe eine Eingangsportalhälfte auf, welche unter festem Winkel mit der Feder-Dämpfer-Einheit verbunden ist und eine Ausgangsportalhälfte, welche bezogen auf die Eingangsportalhälfte verschwenkbar angeordnet ist. Durch diese Ausführungsform besteht die Möglichkeit, die Bodenfreiheit des geländegängigen Fahrzeuges variabel einzustellen.

Eine weitere bevorzugte Ausführungsform zeichnet sich dadurch aus, dass das höhenverstellbare Portalgetriebe ein mit der Gelenkwelle formschlüssig verbundenes Antriebsrad aufweist, welches mit einem ersten von zwei auf einer Welle gelagerten Zwischenrad gekoppelt ist und wobei ein zweites der beiden Zwischenräder mit dem Abtriebsrad gekoppelt ist. Bei dieser Ausführungsform liegt das Antriebsrad mit dem ersten Zwischenrad in einer ersten Ebene und das zweite Zwischenrad mit dem Abtriebsrad in einer parallel zur ersten Ebene verlaufenden zweiten Ebene.

Bei dieser Ausführungsform kann das geländegängige Fahrzeug mittels Hebeeinrichtungen manuell, hydraulisch oder elektrisch aus einer niedrigen Straßenposition in eine höhere geländegängige Position verfahren werden.

Das Einzelradgetriebe kann als Zahnradgetriebe, Zugriemengetriebe oder Kettengetriebe ausgebildet sein.

Um einerseits den Portalantrieb bzw. das Portalgetriebe rundum abzudecken und andererseits durch das Nachrüsten des Portals die Spurbreite des Fahrzeugs nur unwesentlich zu erhöhen ist eine Felge vorgesehen, in der das Portalgetriebe aufgenommen wird und dessen innere Anschraubfläche der Felgenschüssel außerhalb des Felgenbettes angeordnet ist.

Um das Getriebe geräuschoptimiert auszubilden, können die einzelnen Zahnräder mit einer Schrägverzahnung versehen sein. Auch können als Antriebsrad, Zwischenrad und Abtriebsrad metallische oder nichtmetallische Materialien beispielsweise als Laufflächen eingesetzt werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine dreidimensionale Darstellung einer Einzelradaufhängung mit Portalgetriebe,
- Fig. 2: eine Seitenansicht der Einzelradaufhängung mit Portalgetriebe in Schnittdarstellung,
- Fig. 3: eine Vorderansicht der Einzelradaufhängung in Schnittdarstellung,
- Fig. 4: eine schematische Darstellung eines höhenverstellbaren Portalgetriebes in Seitenansicht,
- Fig. 5: eine schematische Darstellung des höhenverstellbaren Portalgetriebes in Draufsicht,
- Fig. 6: eine schematische Darstellung des Portalgetriebes als Zugmittelportal, wobei das Zugmittel eine Kette oder ein Zahnriemen ist,
- Fig. 7: eine Draufsicht einer Felge, und
- Fig. 8: einen Querschnitt der Felge.

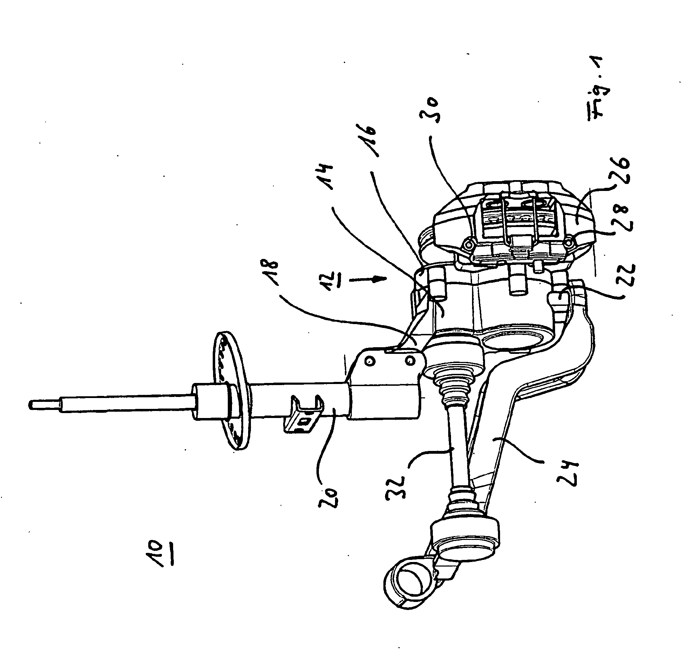

Fig. 1 zeigt eine perspektivische Darstellung einer Einzelradaufhängung 10 in Portalbauweise. Die Einzelradaufhängung 10 ist rein beispielhaft ausgewählt, ohne dass die Erfindung durch diese Ausführungsform begrenzt ist.

Die Einzelradaufhängung 10 umfasst das erfindungsgemäß als Nachrüstbausatz ausgebildete Einzelradgetriebe 12 mit einem Portalgehäuse 14, welches mit einem Portaldeckel 16 abgedeckt ist. Das Portalgehäuse 14 ist über einen ersten Anlenkpunkt 18 mit einer Feder-Dämpfer-Einheit 20 und über einen zweiten Anlenkpunkt 22 mit einem Querlenker 24 verbunden. Dabei ist der zweite Anlenkpunkt 22 an einer Unterseite des Portalgehäuses 14 und der erste Anlenkpunkt 18 an einer Oberseite des Portalgehäuses 14 angeordnet.

Die Anlenkpunkte 18, 22 sind derart angeordnet, dass der nachträgliche Einbau bei fast allen Fahrzeugen möglich ist, wobei keine konstruktiven Änderungen am Fahrzeug nötig sind.

Zur Befestigung eines Bremssattels 26 sind an dem Portaldeckel 16 weitere Anlenkpunkte 28, 30 vorgesehen.

Im dargestellten Ausführungsbeispiel erfolgt der Antrieb mechanisch über eine Gelenkwelle 32. Alternativ kann der Antrieb auch hydraulisch oder elektrisch ausgeführt sein.

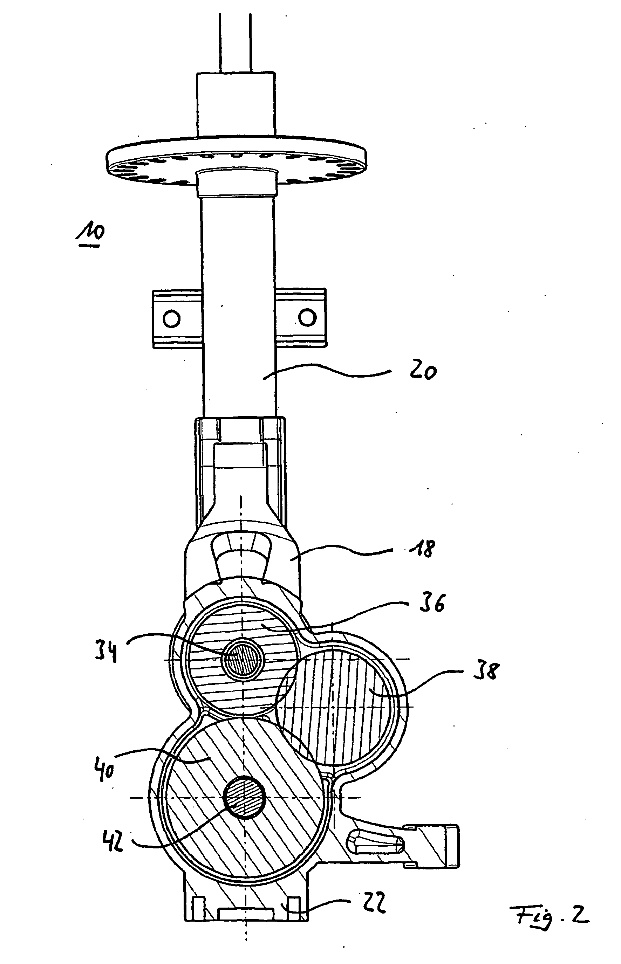

Fig. 2 zeigt einen Längsschnitt durch die in Fig. 1 dargestellte Einzelradaufhängung 10.

Die Gelenkwelle 32 ist mit einer Antriebswelle 34 gekoppelt, die formschlüssig mit einem Antriebsritzel 36 verbunden ist. Dieses ist mit einem Zwischenrad 38 kämmend in Eingriff, wodurch zunächst die Drehrichtung umgekehrt wird. Des Weiteren steht das Zwischenrad 38 mit einem Abtriebsrad 40 in Eingriff, das über eine formschlüssig Verbindung eine Abtriebswelle 42 antreibt und zwar im Gegensinn zu dem Zwischenrad 38. Somit wird bei jeder ungeraden Anzahl von Zahnrädern 36, 38, 42 der Drehsinn der Antriebswelle 34 an der Abtriebswelle 42 beibehalten. Dadurch wird eine Einzelraduntersetzung mit frei wählbarer Unter- oder Übersetzung als nachträglich einbaubarer Bausatz bei fast allen Fahrzeugen möglich, da die Raddrehrichtung beibehalten wird und keine konstruktiven Änderungen am Fahrzeug, insbesondere des Getriebes oder des Differentials nötig sind.

Generell bleibt das gesamte Fahrzeug erhalten, wobei lediglich das Fahrwerk, die Räder und die Bremsen ersetzt werden.

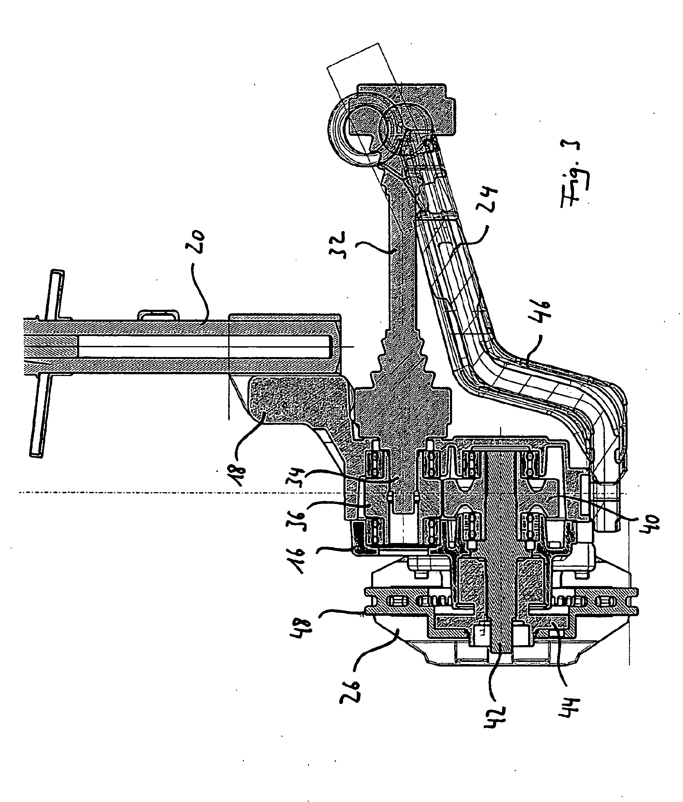

Fig. 3 zeigt einen Querschnitt der Einzelradaufhängung 10, wobei ersichtlich ist, dass der Drehmomentfluss von der Antriebswelle 34 an die Abtriebswelle 42 und somit an die Lagernarbe 44 übertragen wird. Des Weiteren ist der Querlenker 24 mit einer Kröpfung 46 versehen, die einen starken Gewinn an Bodenfreiheit in der Fahrzeugbreite bringt und somit die Portalerhöhung zur vollen Wirkungsweise bringt. Des Weiteren wird die kompakte Bauart ersichtlich, wobei das Antriebsrad 36, das Zwischenrad 38 und das Abtriebsrad 40 in einer Ebene angeordnet sind. Mit der Lagernarbe 44 ist des Weiteren eine Bremsscheibe 48 verbunden, die sich innerhalb des Bremssattels 26 dreht.

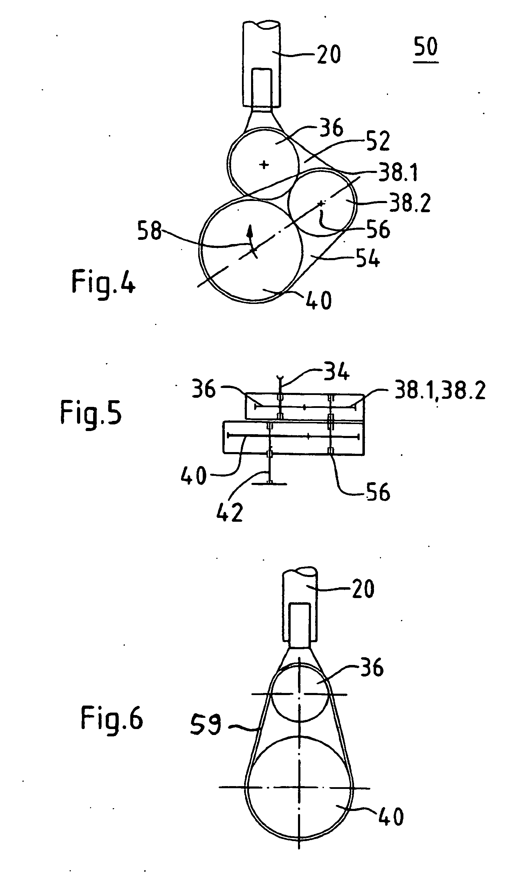

Fig. 4 zeigt rein schematisch ein zweites Ausführungsbeispiel eines Einzelradgetriebes 50, welches als höhenverstellbares Portal ausgebildet ist. Das höhenverstellbare Portal 50 besteht aus einer Eingangsportalhälfte 52, die beispielsweise unter festem Winkel zum Dämpferbein 20 mit diesem fest verbunden ist. Eine Ausgangsportalhälfte 54 ist verschwenkbar mit der Eingangsportalhälfte gelagert und fixierbar. Bei diesem Ausführungsbeispiel geht der Drehmomentfluss von dem Antriebsrad 36 auf zwei auf einer gemeinsamen Achse 56 gelagerte Zwischenräder 38.1, 38.2 an das Abtriebsrad 40 und schließlich an die Abtriebswelle 42 über. Eine Draufsicht dieser Anordnung ist in Fig. 5 dargestellt.

Somit kann von der dargestellten Einstellung mit maximaler Verfahrhöhe, also Geländebetrieb, auf eine niedrige Position in Richtung des Pfeils 58 für Straßenbetrieb umgestellt werden. Dabei kann die Umstellung manuell oder hydraulisch bzw. elektrisch mittels Stellelementen (nicht dargestellt) ausgeführt werden.

Anstelle des Zahnradtriebes kann auch ein Zugmitteltrieb verwendet werden, welche im Ausführungsbeispiel in Seitenansicht in Fig. 6 dargestellt ist. Dabei ist als Zugmittel 59 eine Kette oder ein Zahnriemen eingesetzt, der das Antriebsrad 36 mit dem Abtriebsrad 40 koppelt.

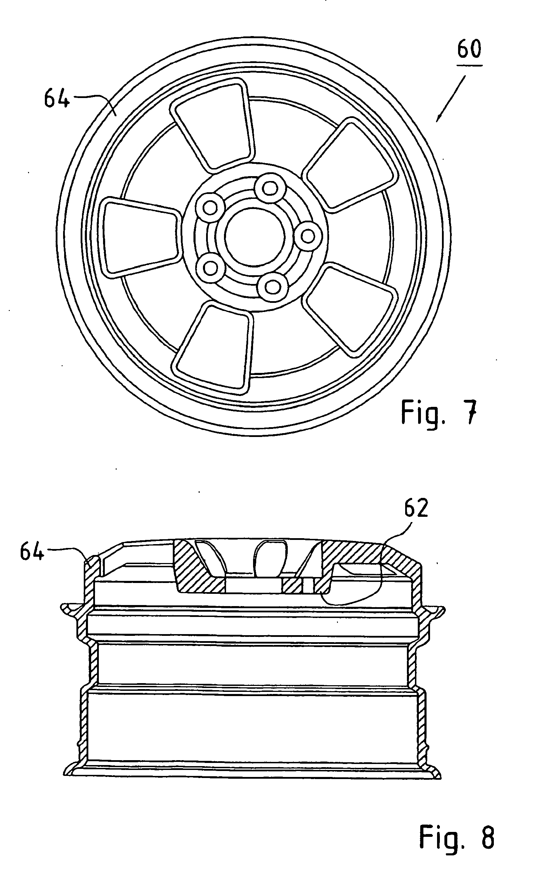

Die Fig. 7 und 8 zeigen ein Ausführungsbeispiel einer zum Portalgetriebe 12 passenden Felge 60. Bei dieser Felge ist eine innere Anschraubfläche 62 der Felgenschüssel 64 außerhalb des Felgenbettes angeordnet. Somit ist einerseits der Portalantrieb bzw. das Portalgetriebe 12 rundum abgedeckt und andererseits durch das Nachrüsten des Portalgetriebes 12 die Spurbreite des Fahrzeuges nur unwesentlich verbreitert.

Die Über- bzw. Untersetzung des Portalgetriebes 12 ist frei wählbar einstellbar und vorzugsweise im Bereich von 0,5 bis 2,5 gewählt.

## Patentansprüche

1. Einzelradgetriebe (12) für geländegängige Fahrzeuge mit hoher Bodenfreiheit, umfassend ein über eine Antriebswelle (34) mit einer fahrzeugseitigen Gelenkwelle (32) koppelbares Antriebsrad (36), welches über zumindest ein Zwischenrad (38) mit einem Abtriebsrad (40) gekoppelt ist, welches formschlüssig mit einer gegenüber der Antriebswelle (34) zur Erzeugung einer hohen Bodenfreiheit höhenversetzten Abtriebswelle (42) zum Antrieb einer Felge eines Rades verbunden ist,
**dadurch gekennzeichnet,**
**dass** das Antriebsrad (36) über ein einziges Zwischenrad (38) mit dem Abtriebsrad (40) in Eingriff ist, wobei das Antriebsrad (36), das Zwischenrad (38) und das Abtriebsrad (40) derart in einer Ebene liegend versetzt zueinander angeordnet sind, dass deren Mittelpunkte ein Dreieck bilden, dass das Antriebsrad (36), das Zwischenrad (38) und das Abtriebsrad (40) als Portalgetriebe in einem als nachrüstbarer Bausatz ausgebildeten Portalgehäuse angeordnet sind, umfassend ein erstes Portalgehäuseteil (14) mit einem ersten Anlenkpunkt (18) für eine Feder-Dämpfereinheit (20) und einem zweiten Anlenkpunkt (22) für zumindest einen Querlenker (24) sowie ein als Deckel (16) ausgebildetes zweites Portalgehäuseteil mit radseitigen Anlenkpunkten (28, 30), an denen eine Bremseinrichtung (26) sowie eine Radlagereinheit (44) befestigbar sind und dass die Felge (60) des Rades das Portalgehäuse zumindest bereichsweise aufnahmen kann.

2. Einzelradgetriebe nach Anspruch 1,
**dadurch gekennzeichnet,**
**dass** das Einzelradgetriebe (12, 50) mit frei wählbarer Unter- oder Übersetzung ausgebildet ist, wobei Unter- bzw. Übersetzungen im Bereich von 0,5 bis 2,5 einsetzbar sind.

3. Einzelradgetriebe nach Anspruch 1 oder 2,
**dadurch gekennzeichnet,**
**dass** das Querlenkerelement (24) eine Kröpfung aufweist.

4. Einzelradgetriebe nach zumindest einem der vorhergehenden Ansprüche,
**dadurch gekennzeichnet,**
**dass** das Einzelradgetriebe (50) als höhenverstellbares Portalgetriebe ausgebildet ist.

5. Einzelradgetriebe nach zumindest einem der vorhergehenden Ansprüche,
**dadurch gekennzeichnet,**
**dass** das Portalgetriebe (50) eine Eingangsportalhälfte (52) aufweist, welche unter festem Winkel mit der Feder-Dämpfereinheit (20) verbunden ist und eine Ausgangsportalhälfte (54) aufweist, welche bezogen auf die Eingangsportalhälfte (52) verschwenkbar angeordnet ist.

6. Einzelradgetriebe nach zumindest einem der vorhergehenden Ansprüche,
**dadurch gekennzeichnet,**
**dass** das höhenverstellbare Portalgetriebe (50) ein mit der Gelenkwelle (32) formschlüssig verbundenes Antriebsrad (36) aufweist, welches mit einem ersten (38.1) von zwei auf einer Welle (56) gelagerten Zwischenrädern (38.1, 38.2) gekoppelt ist und wobei ein zweites (38.2) der beiden Zwischenräder (38.1, 38.2) mit dem Abtriebsrad (40) gekoppelt ist.

7. Einzelradgetriebe nach zumindest einem der vorhergehenden Ansprüche,
**dadurch gekennzeichnet,**
**dass** das Antriebsrad (36) mit dem ersten Zwischenrad (38.1) in einer ersten Ebene und das zweite Zwischenrad (38.2) mit dem Abtriebsrad (40) in einer parallel zur ersten Ebene verlaufenden zweiten Ebene angeordnet sind.

8. Einzelradgetriebe nach zumindest einem der vorhergehenden Ansprüche,
**dadurch gekennzeichnet,**
**dass** das geländegängige Fahrzeug mittels Hebeeinrichtungen manuell, hydraulisch oder elektrisch von einer niedrigen Straßenposition in eine höhere geländegängige Position verfahrbar ist.

9. Einzelradgetriebe nach zumindest einem der vorhergehenden Ansprüche,
**dadurch gekennzeichnet,**
**dass** das Einzelradgetriebe (20, 50) als Zahnradgetriebe und/oder Zugriemengetriebe und/oder Kettengetriebe ausgebildet ist.

10. Einzelradgetriebe nach zumindest einem der vorhergehenden Ansprüche,
**dadurch gekennzeichnet,**
**dass** die Zahnräder (36, 38, 40) eine Schrägverzahnung aufweisen.

11. Einzelradgetriebe nach zumindest einem der vorhergehenden Ansprüche,
**dadurch gekennzeichnet,**
**dass** die Zahnräder (36, 38, 40) aus einem metallischen oder nicht metallischen Material zumindest teilweise ausgebildet sind.

12. Einzelradgetriebe nach zumindest einem der vorhergehenden Ansprüche,
**dadurch gekennzeichnet,**
**dass** eine innere Anschraubfläche (62) einer Felgenschüssel (64) außerhalb des Felgenbettes angeordnet und mit der Radlagereinheit (44) verbindbar ist.

## Claims

1. A single wheel transmission (12) for cross-country vehicles with high ground clearance, comprising a drive gear (36) coupleable via a drive shaft (34) with a cardan shaft (32) at the vehicle side, said drive gear coupled via at least one intermediate gear (38) with a driven gear (40), which for the purpose of driving a rim of a wheel is connected form-fittingly with a driven shaft (42), said driven shaft (42) being offset in height relative to the drive shaft (34) for achieving a high ground clearance,
**characterized in**
**that** the drive gear (36) is engaged with the driven gear (40) via one single intermediate gear (38), with the drive gear (36), the intermediate gear (38) and the driven gear (40) are arranged offset to each other in plane such that their centers form a triangle, that the drive gear (36), the intermediate gear (38) and the driven gear (40) are arranged as gantry transmission in a gantry housing designed as retrofittable kit, comprising a first gantry housing component (14) with a first attachment point (18) for a spring-shock absorber element (20) and with a second attachment point (22) for at least one wishbone (24) as well as a second gantry housing component designed as cover (16) and with attachment points (28, 30) at the wheel side, to which attachment points are attachable a brake unit (26) as well as a wheel baring unit (44) and that the rim (60) of the wheel is capable to receive the gantry housing at least in sections.

2. A single wheel transmission according to claim 1,
**characterized in**
**that** the single wheel transmission (12, 50) is designed with freely selectable gear reduction or transmission, whereby gear reductions, respectively transmission are applicable in the range of 0.5 to 2.5.

3. A single wheel transmission according to claim 1 or 2,
**characterized in**
**that** the wishbone element (24) has a crank.

4. A single wheel transmission according to at least one of the preceding claims, **characterized in**
**that** the single wheel transmission (50) is designed as a height-adjustable gantry transmission.

5. A single wheel transmission according to at least one of the preceding claims,
**characterized in**
**that** the gantry transmission (50) has an input gantry half (52), that is joined with the spring-shock absorber unit (20) at a fixed angle and an output gantry half (54), that is pivotably arranged relative to the input gantry half (52).

6. A single wheel transmission according to at least one of the preceding claims,
**characterized in**
**that** the height-adjustable gantry transmission (50) has a drive gear (36) form-fittingly connected with the drive shaft (32), said drive gear being coupled with a first (38.1) of two intermediate gears (38.1, 38.2) mounted on a shaft (56) and wherein a second (38.2) of the two intermediate gears (38.1, 38.2) is coupled with the driven gear (40).

7. A single wheel transmission according to at least one of the preceding claims,
**characterized in**
**that** the drive gear (36) with the first intermediate gear (38.1) lies in a first plane and the second intermediate gear (38.2) with the driven gear (40) in a second plane that is parallel with the first plane.

8. A single wheel transmission according to at least one of the preceding claims,
**characterized in**
**that** the cross-country vehicle can be shifted by means of lifting devices manually, hydraulically or electrically from a low road position to a higher cross-country position.

9. A single wheel transmission according to at least one of the preceding claims,
**characterized in**
**that** the single wheel transmission unit (20, 50) is designed as gear transmission and/or traction belt transmission and/or chain transmission.

10. A single wheel transmission according to at least one of the preceding claims,
**characterized in**
**that** the gears (36, 38, 40) have helical gearing.

11. A single wheel transmission according to at least one of the preceding claims,
**characterized in**
**that** the gears (36, 38, 40) are made from metallic or non-metallic materials, at least partially.

12. A single wheel transmission according to at least one of the preceding claims,
**characterized in**
**that** an inside screw-on surface (62) of a rim dish (64) is arranged outside the rim well and is connectable with the wheel bearing unit (44).

## Revendications

1. Entraînement à roues indépendantes (12) pour véhicules tout-terrain avec grande garde au sol, comprenant un pignon menant (36) pouvant être couplé à un arbre à cardan (32) côté véhicule par l'intermédiaire d'un arbre menant (34) et qui est couplé par l'intermédiaire d'au moins un pignon intermédiaire (38) à un pignon mené (40), lequel est relié par complémentarité de forme à un arbre mené (42) décalé en hauteur par rapport à l'arbre menant (34) pour obtenir une grande garde au sol et entraîner une jante d'une roue,
**caractérisé en ce**
**que** le pignon menant (36) s'engrène avec le pignon mené (40) via un unique pignon intermédiaire (38), sachant que le pignon menant (36), le pignon intermédiaire (38) et le pignon mené (40) sont disposés dans un plan et décalés les uns par rapport aux autres de manière telle que leurs centres forment un triangle, que le pignon menant (36), le pignon intermédiaire (38) et le pignon mené (40) sont disposées en tant qu'entraînement portique dans un carter portique conçu comme module pour équipement ultérieur, comprenant une première partie de carter portique (14) avec un premier point d'articulation (18) pour une unité de suspension et d'amortissement (20) et un deuxième point d'articulation (22) pour au moins bras oscillant transversal (24), ainsi qu'une deuxième partie de carter portique conçue comme couvercle (16) avec des point d'articulation côté roue (28, 30), auxquels peuvent être fixés un dispositif de freinage (26) et une unité de roulement de roue (44), et que la jante (60) de la roue peut loger le carter portique au moins partiellement.

2. Entraînement à roues indépendantes selon la revendication 1,
**caractérisé en ce**
**que** l'entraînement à roues indépendantes (12, 50) est conçu avec une démultiplication ou une multiplication librement sélectionnable, la démultiplication et/ou la multiplication étant utilisables dans une plage comprise entre 0,5 et 2,5.

3. Entraînement à roues indépendantes selon la revendication 1 ou 2,
**caractérisé en ce**
**que** l'élément à bras oscillant transversal (24) présente un coude.

4. Entraînement à roues indépendantes selon au moins une des revendications précédentes,
**caractérisé en ce**
**que** l'entraînement à roues indépendantes (50) est conçu comme entraînement portique réglable en hauteur.

5. Entraînement à roues indépendantes selon au moins une des revendications précédentes,
**caractérisé en ce**
**que** l'entraînement portique (50) présente un demi-portique d'entrée (52) relié à l'unité de suspension et d'amortissement (20) sous un angle fixe, et un demi-portique de sortie (54) disposé de manière pivotante par rapport au demi-portique d'entrée (52).

6. Entraînement à roues indépendantes selon au moins une des revendications précédentes,
**caractérisé en ce**
**que** l'entraînement portique (50) réglable en hauteur présente un pignon menant (36) relié par complémentarité de forme à l'arbre à cardan (32) et couplé à un premier pignon intermédiaire (38.1) de deux pignons intermédiaires (38.1, 38.2) logés sur un arbre (56), sachant que le second pignon (38.2) des deux pignons intermédiaires (38.1, 38.2) est couplé au pignon mené (40).

7. Entraînement à roues indépendantes selon au moins une des revendications précédentes,
**caractérisé en ce**
**que** le pignon menant (36) avec le premier pignon intermédiaire (38.1) sont situés dans un premier plan, et le second pignon intermédiaire (38.2) avec le pignon mené (40) sont situés dans un second plan parallèle au premier plan.

8. Entraînement à roues indépendantes selon au moins une des revendications précédentes,
**caractérisé en ce**
**que** le véhicule tout-terrain peut être amené d'une position de route basse à une position tout-terrain haute par des dispositifs élévateurs de manière manuelle, hydraulique ou électrique.

9. Entraînement à roues indépendantes selon au moins une des revendications précédentes,
**caractérisé en ce**
**que** l'entraînement à roues indépendantes (20, 50) est conçu comme transmission par engrenages et/ou transmission par courroies de tirage et/ou transmission par chaînes.

10. Entraînement à roues indépendantes selon au moins une des revendications précédentes,
**caractérisé en ce**
**que** les roues dentées (36, 38, 40) présentent une denture hélicoïdale.

11. Entraînement à roues indépendantes selon au moins une des revendications précédentes,
**caractérisé en ce**
**que** les roues dentées (36, 38, 40) sont au moins partiellement fabriquées dans un matériau métallique ou non métallique.

12. Entraînement à roues indépendantes selon au moins une des revendications précédentes,
**caractérisé en ce**
**qu'**une surface de vissage intérieure (62) d'un voile de jante (64) est située hors de l'embase de jante et peut être reliée à l'unité de roulement de roue (44).
